# EUROPEAN PATENT APPLICATION

(11) **EP 1 987 799 A1**
(43) Date of publication of application: **05.11.2008**
(21) Application number: 08251617.0
(22) Date of filing: 06.05.2008
(51) Int. Cl.: A61C 7/12, A61C 7/14, A61C 7/00

(54) **Torque correction model**

(30) Priority: 04.05.2007 US 916189 P
(71) Applicant: ORMCO CORPORATION, Orange, CA 92867 (US)
(72) Inventor: Andreiko, Craig A., Alta Loma, CA 91701 (US)
(74) Representative: Findlay, Alice Rosemary

(57) **Abstract**

A custom orthodontic appliance comprised of brackets to be positioned on a patient's teeth, and an archwire, is customized to provide a desired torque to a tooth by selecting an angle for the slot of at least one bracket so as to provide a torque interaction between that bracket slot and the archwire. The torque interaction is computed to compensate for tooth tilt resulting from misalignment of the force vector applied by the archwire with the tooth center of resistance. The torque interaction is computed at the desired final position of the teeth, and may be computed to provide for an applied torque even where the tooth is positioned in the desired final tooth position to compensate for force diminution. Material properties of the archwire and the relative archwire slot geometry are evaluated to determine an archwire / slot angular offset in which torque is applied to the bracket.

## Description

The present invention relates to computer-aided orthodontia, and in particular the computerized generation of orthodontic appliances that are individualized for a particular patient.

In orthodontics it is difficult to create a pure translational movement of a tooth, or to control rotation of the tooth in what is called called the Y-Z plane. This problem is most acute when the archwire has a round cross-section, but is also observed with archwires of square and rectangular sections.

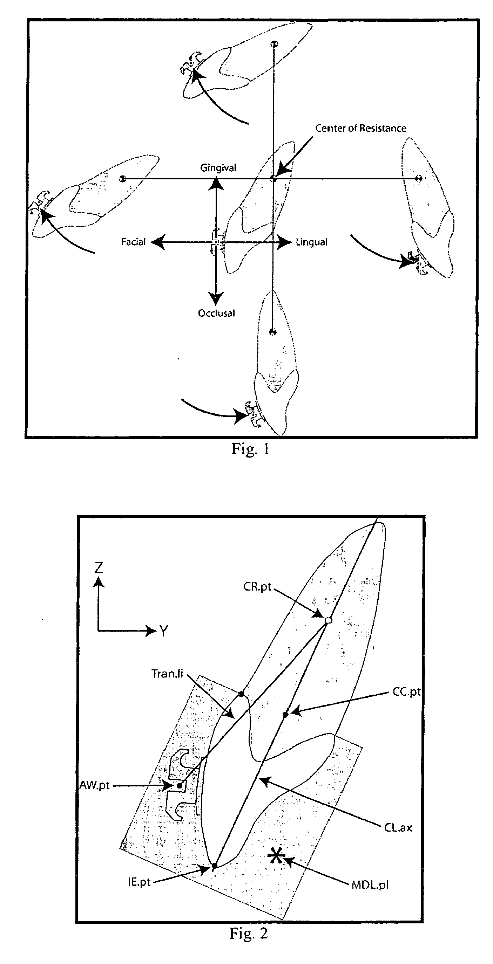

Fig. 1 provides a simplified illustration of an archwire, bracket and tooth, and their relative landmarks, and Fig. 2 provides a more detailed view of landmark points within the tooth. The tooth's Center of Resistance (CR.pt) and the archwire axis (which is herein identified as AW.pt), are typically not coincident. As a consequence, pressure from the archwire other than along the Crown Long Axis (CLA.ax) causes some amount of angular change in the position of the tooth. The amount of rotation force is related to the alignment of the force vector of the deflected wire to the tooth's CR.pt. Fig. 1 illustrates the resulting rotational effects on a tooth caused by archwire force in the gingival, occlusal, facial and lingual directions.

Rotation of the tooth under applied archwire force, increases the complexity of orthodontic correction and avoiding such rotations is an important part of orthodontic correction.

Clinicians have traditionally attempted to solve torque correction issues by wire bending. From the clinician's point of view when the case is submitted the clinician would intuit those areas that should be corrected, based on experience drawn from a menu of typical scenarios. However, this solution is not necessarily systematic nor consistent.

In accordance with principles of the present invention, a custom orthodontic appliance comprised of brackets to be positioned on a patient's teeth, and an archwire, is customized to provide a desired torque to a tooth by selecting an angle for the slot of at least one bracket so as to provide a torque interaction between that bracket slot and the archwire.

In preferred embodiments, the torque interaction is computed to compensate for tooth tilt resulting from misalignment of the force vector applied by the archwire with the tooth center of resistance. Furthermore, the torque interaction is computed at the desired final position of the teeth. In further specific embodiments, the slot angle is computed to provide for an applied torque even where the tooth is positioned in the desired final tooth position to compensate for force diminution in the archwire.

In the disclosed particular embodiment the material properties of the archwire and the relative archwire slot geometry are evaluated to determine an archwire / slot angular offset in which torque is applied to the bracket.

The invention will now be further described by way of example with reference to the accompanying drawings, in which:
Fig. 1 is a simplified illustration of archwire force causing tooth rotation about the tooth Center of Resistance;
Fig. 2 is an illustration defining points and planes on a tooth, used to define movement of tooth objects;
Fig. 3 is a simplified version of Fig. 2 showing only data required for calculation;
Fig. 4 is a an illustration of a typical desired translational tooth movement, shown in schematic;
Fig. 5 is an illustration of the movements of a tooth when seeking to accomplish the translational tooth movement illustrated in Fig. 4, in the case that the archwire force vector from AW.pt does not pass through CR.pt;
Fig. 6 is an illustration of the results of steps 1 through 11 in Fig. 4, illustrating the path followed by the center of resistance CR.pt, and illustrating the undesired rotation of line Tran.li which extends from the archwire axis AW.pt, and the tooth center of resistance CR.pt;
Fig. 7 illustrates the torque needed to prevent or undo the undesired rotation of Tran.li in the example of Fig. 6 to create a purely translatory tooth movement as originally desired;
Fig. 8 illustrates the stress-strain relationships of a number of archwire materials including stainless steel, TMA and NiTi;
Figs. 9A and 9B illustrate the use of round and rectangular archwires and the uncontrolled movements and rotations that are not controlled by the archwire;
Figs. 10A and 10B illustrate two cases of bracket-archwire interaction; in Fig. 10A the archwire torque tilts the tooth lingually and in Fig. 10B the archwire force tilts the tooth labially;
Fig. 10C illustrates a case in which the archwire force moves the tooth from a labial tilt to an upright position, and the archwire force complements the natural effect of this motion by applying a lingual torque;
Fig. 11A illustrates the use of traction forces to a bracket on a molar, to tilt an incisor;
Fig. 11B illustrates a high cuspid, which when brought in line with surrounding teeth would typically tilt lingually;
Fig. 11C illustrates lingually erupting laterals creating a crossbite, which when the crossbite is resolved typically tilt labially;
Fig. 11D illustrates buccal expansion, which typically leads to labial tilt; and
Fig. 12 illustrates the use of tilt correction in appliance design in accordance with principles of the present invention.

In accordance with the present disclosure, a computer aided orthodontia design system utilizes tooth shape data to approximate the actual translational and angular effects. This process is performed after appliance design and prior to final fabrication.

Referring now to Fig. 2, the tooth landmarks used in accordance with principles of the present invention may be identified:
MDL.pl (Mid Developmental Lobe Plane);
CC.pt (Cervical Center Point);
CL.ax (Crown Long Axis);
FEGJ.pt (facial Enamel Gingival Junction Point);
IE.pt (Incisal Edge Point): Found by projecting a line normal to MDL.pl through BC.pt;
Crown Height (CH.li): The distance from IE.pt to FEGJ.pt. This is used to find CR.pt by using data from a lookup table proportionate to CH.li along CL.ax from CC.pt extending toward the root tip;
CR.pt (Center of Resistance Point): Found by extending CL.ax gingivally by an amount proportional to the length of the line segment CH.li (approximate crown height) specific to each tooth. Typically, the crowns and roots are reasonably proportional to each other and the literature references the location of the Centers of Resistance;
AW.pt (Archwire Axis Point): Found by locating the intersection of the center of the wire and MDL.pl after appliance design is completed;
Translation Line (Tran.li): Line through and containing AW.pt and Cr.pt;

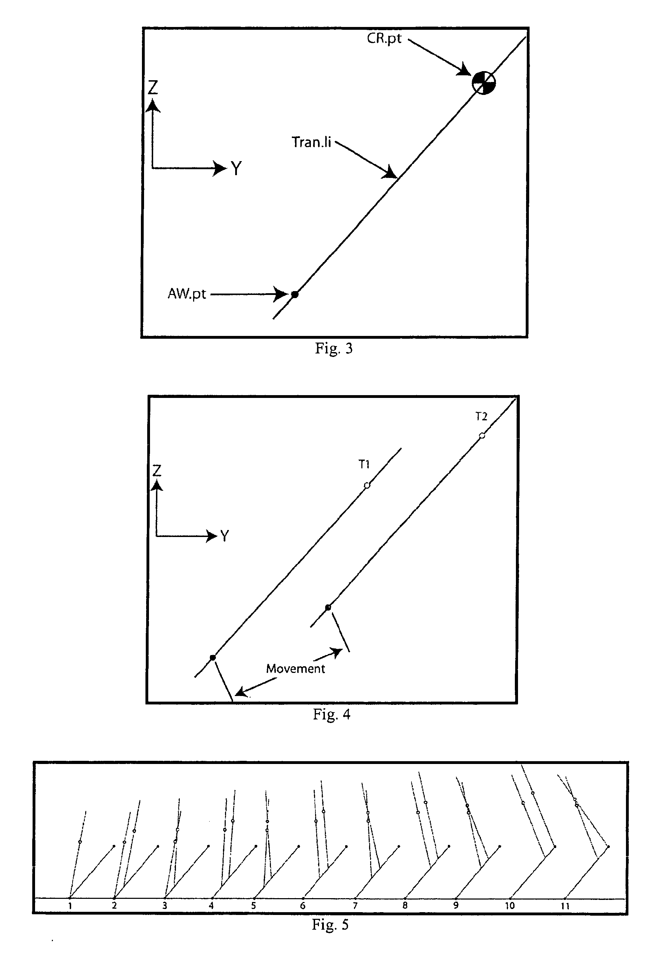

Referring now to Fig. 3, a simplified view of the tooth geometry and landmarks, showing only data required for calculation, is useful for further discussion. Each of the points illustrated in Fig. 3 is on the Mid-Developmental Lobe Plan for the tooth MDL.pl.

Fig. 4 illustrates a typical desired translational tooth movement, shown in schematic. This tooth movement is "translational" because AW.pt and CR.pt are translated such that the angle of Tran.li is unchanged by the movement. A number of typical cases of this type of movement are illustrated below.

Fig. 5 illustrates a model for the movement of AW.pt and CR.pt on the tooth that results from the use of a round orthodontic archwire positioned within a bracket and generating a force that is not aligned with the center of resistance CR.pt. Fig. 5 illustrates 11 steps in the resulting movement identified by the numbers 1-11, each of which is described below.

Step 1: Tran.li is drawn in the initial position, the force vector from the archwire from AW.pt is also illustrated. Notably, the force vector does not pass through CR.pt.

Step 2: For a small motion, AW.pt moves along the force vector and CR.pt moves identically.

Step 3: Because the force vector is not parallel to Tran.li, ultimately Tran.li is rotated (in this case counterclockwise) some amount about the new location of AW.pt, until CR.pt falls on Tran.li in its original position.

Steps 4-5, 6-7, 8-9, 10-11: Steps 2-3 repeat, until CR.pt, AW.pt and Tran.li arrive at the final positions shown in Step 11. Note that Tran.li has, at this point, substantially rotated.

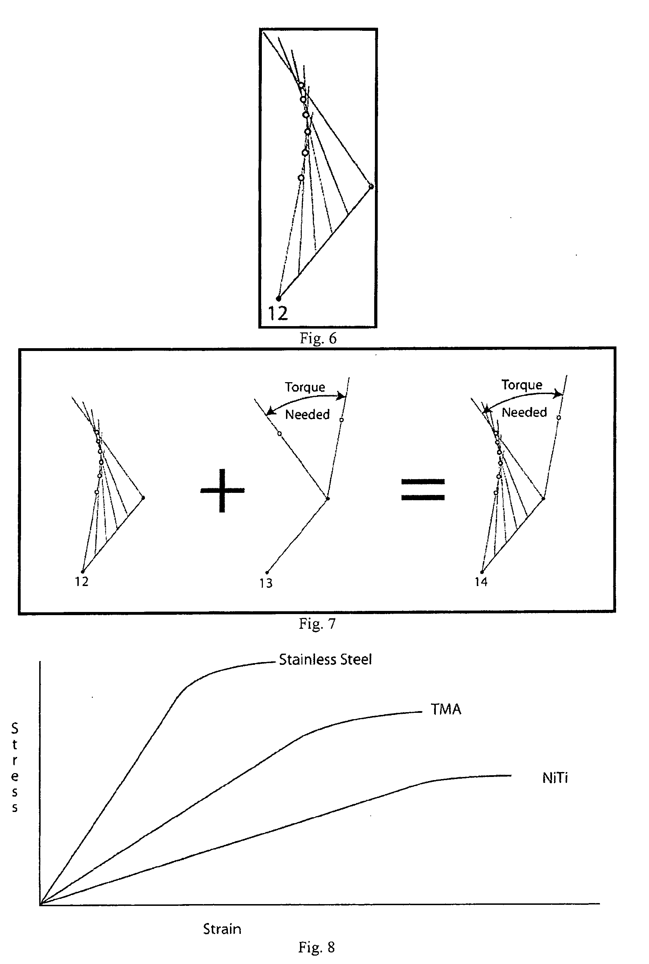

Fig. 6 provides a composite view showing the rotation of Tran.li and movement of CR.pt through the steps illustrated in Fig. 5. Clearly, the rotation of Tran.li is undesired as the original objective was translation only of Tran.li. The observed rotation is caused by the fact that the force vector applied at AW.pt does not pass through CR.pt.

Fig. 7 illustrates the rotation that needs to be applied to Tran.li (rotated clockwise) to restore Tran.li to its original angle to net a translatory move only.

To model the desired torque, to factors must be known:
1). The translational and rotational movements of the individual teeth in reference to MDL.pl from the original position to the final treated position within each arch. This is provided by modeling that movement as described above.
2). What movement has occurred between the two arches in an anterior/posterior direction. This may involve doctor input when the case is submitted.

To apply corrective torque, it is necessary to elaborate upon the interactions between orthodontic archwires and brackets.

In orthodontic appliances there is an interplay between the wire and the slot of the bracket. The slot is typically rectangular and the wires can be round or rectangular and of various dimensions, alloys and sections. Alloys are chosen for different force and elastic capabilities. Typical alloys are 300 series stainless steel, a beta titanium/molybdenum alloy (TMA), and various nickel titanium (superelastic) alloys (NiTi).

Fig. 8 is a graph showing some relative characteristics of these typical alloys. Per unit of deflection, stainless is the stiffest, and the NiTi is the softest alloy. In orthodontics, the principle of "force diminution" states that as the deflection is reduced, at some point the force output by the wire becomes insufficient to move the teeth. As illustrated in Fig. 8, force diminution is most rapid with NiTi wires, and least rapid with stainless. In each case, however, it is believed that the wire never relaxes completely, and so, the tooth is never taken to the exact endpoint that would be computed for a completely relaxed archwire. The stainless wire will bring a tooth closer to the desired end point than will the NiTi, all other things being equal. (Youngs modulus for stainless is 26 million psi, TMA 14 million psi and NiTi about 6million psi.)

The following table details, for various wire sizes (width and height) the relative torsional stiffness of the wire for the three alloys noted above, where the reference stiffness is that of a 0.016 x 0.016 NiTi wire.

| **Wire Height** | **Wire Width** | **18 Slot** | **22 Slot** |
|---|---|---|---|
| 0.016 | 0.016 | 17,1 | NA |
| 0.016 | 0.022 | 9.5 | 29.0 |
| 0.014 | 0.025 | 14.5 | 30.3 |
| 0.016 | 0.025 | 7,8 | 22,5 |
| 0.017 | 0.025 | 4,6 | 18,7 |
| 0.018 | 0.025 | 1,5 | 15.0 |
| 0.019 | 0.025 | NA | 11.4 |
| 0.021 | 0.025 | NA | 4.7 |

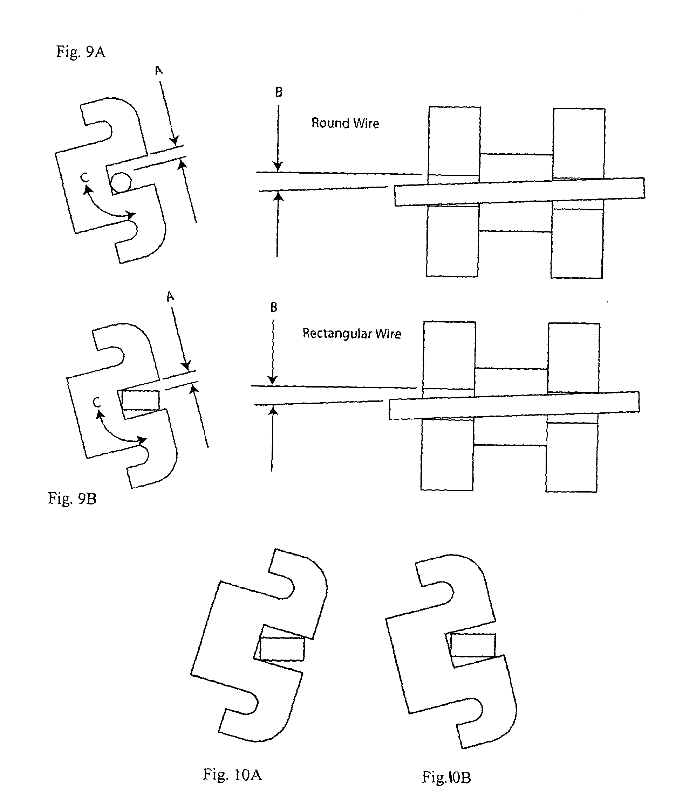

The interplay between the round and rectangular wires and the slot is illustrated in Fig. 9A. Three sources of error between the bracket and archwire are discussed herein, as others are negligible.

Type A error results from variation in the location of the wire in the slot in the direction along the height of the tooth. This results in errors that are generally small since, for an 0.018" slot, the wires used to finish cases are typically 0.016" which results in an error too small to detect.

Type B error results from variation in the archwire angle relative to the slot in the bracket. This source of error affects the tip angle of tooth, and has somewhat greater effect than Type A error, but is also generally insignificant because the bracket width is approximately 0.103" and the "play" is only +/- 0.002" resulting in an angular error of 0.88 degrees.

Type C errors, which are errors in torque and/or tooth tilt angle, are quite significant relative to Type A and Type B errors, and are the topic explored below. A typical wire for an 0.018" slot would be 0.016" x 0.022" and for an 0.022" slot would be 0.019 x 0.025. This can generate and error of +/- 10 degrees in tooth tilt angle. This is especially true if one considers that the corner radius of the wire is typically 0.003". Undersize wires are and are likely to remain the most popular in orthodontic treatment for a variety of reasons.

The following table illustrates, for a variety of rectangular or square cross section wire sizes (designated by height and width), the play in an 18 and 22 bracket slot.

| Wire Height | Wire Width | 18 Slot | 22 Slot |
|---|---|---|---|
| 0.016 | 0.016 | 17,1 | NA |
| 0.016 | 0.022 | 9.5 | 29.0 |
| 0.014 | 0.025 | 14.5 | 30.3 |
| 0.016 | 0.025 | 7,8 | 22,5 |
| 0.017 | 0.025 | 4,6 | 18,7 |
| 0.018 | 0.025 | 1,5 | 15.0 |
| 0.019 | 0.025 | NA | 11.4 |
| 0.021 | 0.025 | NA | 4.7 |

As can be seen in this table, interplay between the wire and the slot coupled with the force output of different sections and alloys can create a loss of control or a divergence from where the appliance was programmed to position the teeth. (As noted in the background, the loss of control is complete in the case of a round wire.)

Most of the effect of the above discussion might be acceptable orthodontically if it weren't for patient related effects. Specifically, depending on the tooth's original starting position (which way the tooth was torqued as the beginning), the torque applied by the archwire can be substantial. As seen in Figs. 10A and 10B, a labially tilted tooth (Fig. 10A) receives a torque that is opposite to that of a lingually tilted tooth (Fig. 10B).

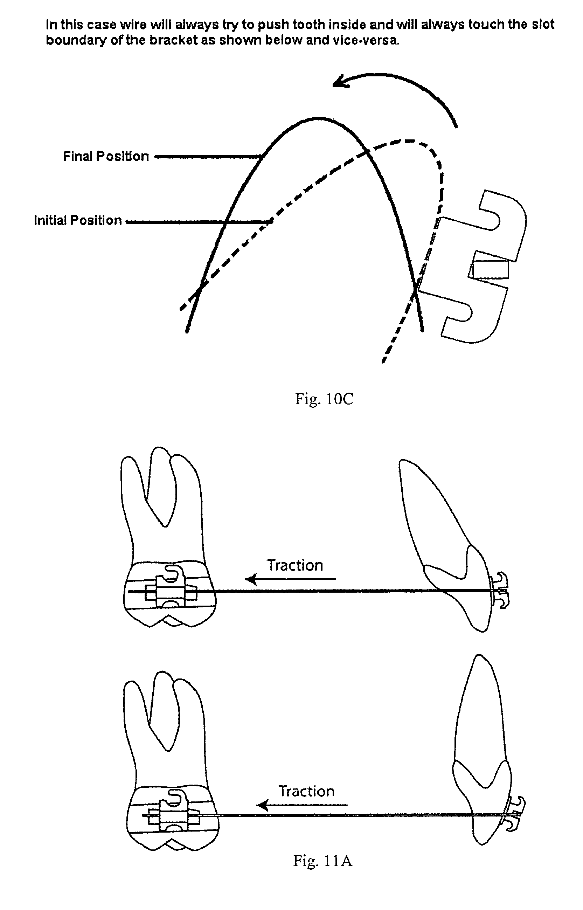

In accordance with principles of the present invention, a torque correction is applied to the bracket design in a custom orthodontic appliance, to correct for tilt error in an orthodontic correction. In the particular described embodiment, the direction of the correction is determined based on the direction of movement of that particular tooth during the treatment, rather than initial torque of the tooth, to ensure that the wire seeks to rotate the tooth-bracket-pad assembly in the desired direction. For example, in the case of Fig. 10C, the wire is attempting to push the tooth in the lingual direction.

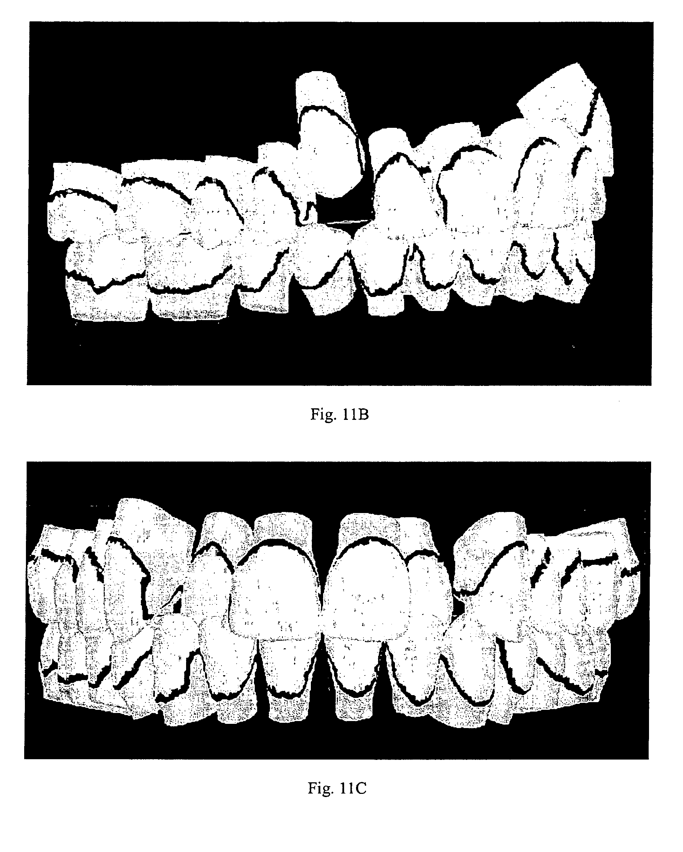

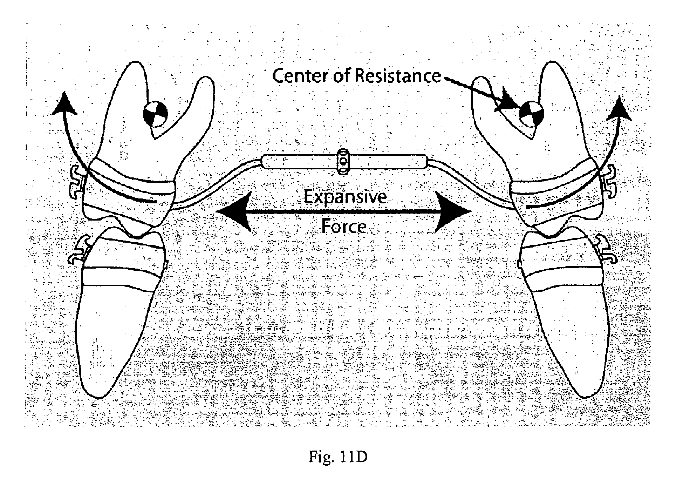

It will be noted that wire torque is defined based on tooth surface, and in some cases the torque direction in initial locations can be misleading if the curvature of the surface is opposite due to any region's particular variance. Furthermore, there are effects from treatment mechanics. One of several scenarios is shown below. Fig. 11 illustrates the starting position and final position created by pulling the archwire the molar tooth as if to close spaces. The resulting tooth tilt repositions the wire in the bracket in a manner that produces or relieves wire-bracket torque depending upon the relative location of the bracket and the incisor.

Other treatment cases are illustrated in Figs. 11B and 11C. In Fig. 11B, an insufficiently erupted tooth must be brought level with its neighboring teeth, a process that often introduces tilt. In Fig. 11C, maxillary teeth erupted on the labial side of the mandibular teeth must be moved labially, often leading to tilt. In Fig. 11D, buccal expansion leads to labial tilt of bicuspids.

Using an orthodontic appliance design system, such as is described in detail in the above-referenced patent applications, the torque applied by the archwire can be computed. For this calculation the finishing (final) wire size and alloy must be known. Although these may take any configuration, typically the size for an 0.018" slot would be 0.016" x 0.022" and for a 0.022" slot the equivalent would be 0.019" x 0.025". In the Insignia software the operator would then have to input the alloy, size and circumstance is to be used.

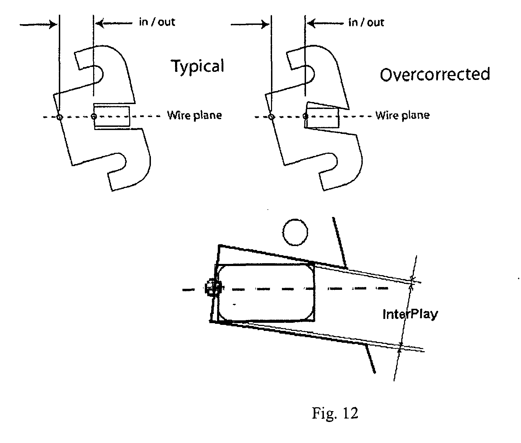

A lookup table may be generated to characterize the torque and positioning of the wire for the various combinations of alloy, size and circumstance. The brackets, which are custom manufactured, or premanufactured and selected from inventory, are selected to have slots with adjusted angles as illustrated in Fig. 12. As seen in Fig. 12, the system computes the interplay between the wire and bracket to determine the angular offset between the wire plane and bracket slot. The lookup table compensates for the rounding of wire corners, and the relative wire and slot sizes. In some wire sections like 19 x 25 in an 0.022 slot the effect of the radius is minimal but in some like 16 x 16 in an 0.018 slot the effect is large. Both the section and radius are taken into consideration. (Radii are almost always 0.003".)

Once the backlash or interplay between the bracket and wire are computed, the shift of the wire plane relative to the bracket slot is determined, and the bracket slot angle is determined to generate a torque tending to prevent undesired tilt during orthodontic correction.

In view of the foregoing, it will be appreciated that a computer assisted orthodontic appliance design system may mathematically calculate the required bracket torques to overcome the side effects of archwire mechanics regardless of the wire size or alloy chosen for finishing. These calculations may incorporate Class II or III mechanics, expansion, ectopic eruption, and just about any orthodontic scenario possible. In those embodiments in which the bracket slots are individually created based on the case data, it is possible to correct for almost any situation that can be imagined. For example, correction can alleviate balancing interferences from buccally erupting upper second molars, dangling lingual cusps in expansion cases, flaring of lower incisors in crowded or Class II situations, and lingual tipping of upper incisors in extraction cases.

While the present invention has been illustrated by a description of various embodiments and while these embodiments have been described in considerable detail, additional advantages and modifications will readily appear to those skilled in the art.

## Claims

1. A method of forming a custom orthodontic appliance, comprising:
providing brackets to be positioned on a patient's teeth;
providing an archwire;
wherein the brackets include an archwire slot that is at an angle selected to provide a desired torque to a tooth.

2. The method of claim 1 wherein the desired torque is computed to compensate for tooth tilt resulting from misalignment of the force vector applied by the archwire with the tooth center of resistance.

3. The method of each of claim 1 or claim 2 wherein the desired torque is computed at the desired final position of the tooth.

4. The method of any preceding claim wherein the slot angle is computed to provide for an applied torque when the tooth is positioned in the desired final tooth position, whereby to compensate for force diminution in the archwire.

5. The method of any preceding claim wherein the slot angle is selected in response to material properties of the archwire.

6. The method of any preceding claim wherein the slot angle is selected in response to relative archwire and slot geometry.

7. A custom orthodontic appliance, comprising:
brackets to be positioned on a patient's teeth;
an archwire;
wherein the brackets include an archwire slot that is at an angle selected to provide a desired torque to a tooth.

8. The method of claim 7 wherein the desired torque is computed to compensate for tooth tilt resulting from misalignment of the force vector applied by the archwire with the tooth center of resistance.

9. The method of each of claim 7 or claim 8 wherein the desired torque is computed at the desired final position of the tooth.

10. The method of any one of claims 7 to 9 wherein the slot angle is computed to provide for an applied torque when the tooth is positioned in the desired final tooth position, whereby to compensate for force diminution in the archwire.

11. The method of any one of claims 7 to 10 wherein the slot angle is selected in response to material properties of the archwire.

12. The method of any one of claims 7 to 11 wherein the slot angle is selected in response to relative archwire and slot geometry.

13. The method of any one of claims 7 to 12 wherein the bracket is custom manufactured for the appliance.

14. The method of any one of claims 7 to 12 wherein the bracket is pre-manufactured and selected from an inventory of premanufactured brackets having specific configurations.
